# EUROPÄISCHE PATENTSCHRIFT

(11) **EP 0 300 214 B1**
(45) Veröffentlichungstag und Bekanntmachung des Hinweises auf die Patenterteilung: **15.09.1993**
(21) Anmeldenummer: 88109962.6
(22) Anmeldetag: 23.06.1988
(51) Int. Cl.: A22C 25/16

(54) **Vorrichtung zum Filetieren von Fischen**
Fish filleting device
Dispositif à lever les filets des poissons

(30) Priorität: 18.07.1987 DE 3723860
(43) Veröffentlichungstag der Anmeldung: 25.01.1989
(73) Patentinhaber: NORDISCHER MASCHINENBAU RUD. BAADER GMBH + CO KG, 23560 Lübeck (DE)
(72) Erfinder: Braeger, Horst, 2400 Lübeck (DE)

(56) Entgegenhaltungen:
- DE-A- 1 454 087
- DE-A- 2 221 269
- DE-A- 2 350 561
- DE-A- 3 339 631
- DE-B- 2 912 982
- GB-A- 2 063 051
- US-A- 1 709 362

## Beschreibung

Die Erfindung betrifft eine Vorrichtung zum Filetieren von Fischrümpfen, insbesondere von Fischen mit kurz gewachsener oder durch entsprechende Schnittführung beim Köpfen bis auf einen geringen Rest gekürzter bzw. ganz entfernter Bauchhöhle, mit jeweils Paaren von umlaufend angetriebenen Bauchfiletiermessern, Rückenfiletiermessern, die mit ihren Achsen in einer Schwinge gelagert sind, welche durch eine Feder in Richtung der Bahn der Fische belastet wird, sowie in den Ebenen der Rückenfiletiermesser angeordneter, untereinander einen Spalt für den Durchlaß der Bauch- bzw. Rückenspeichen und miteinander einen seitlichen Spalt belassender Bauch- und Rückenführungen.

Aus der DE-PS 23 50 561 ist eine Vorrichtung zum Filetieren von Flachfischen bekannt, bei welcher die Bearbeitung unter Vorbeigang der Fische an längs einer senkrechten Bahn angeordneten Werkzeugen erfolgt. Bei dieser Vorrichtung sind sich einander gegenüberliegenden Filetiermessern nachgeordnete Transportscheiben vorgesehen, die den Fischkörper unter Eintauchen in die gemachten Bauch- und Rückenfiletierschnitte und Angriff an den Flanken der Bauch- und Rückenspeichen fördern.

Diesem Konzept lag eine Entwicklung zugrunde, die Gegenstand der DE-OS 22 21 269 ist und welche die Schaffung einer kostengünstigen Vorrichtung zum Ziele hatte, bei der die Förderung des Fisches zunächst der Schwerkraft und dann zusätzlich dem Reibmoment zwischen Fisch und Filetiermessern überlassen und lediglich mit einem einfachen, zusätzlich außen am Fisch angreifenden Hilfsförderer auszukommen versucht wurde. Wie sich bald zeigte, war dieses Konzept nicht realisierbar, da die dem Fisch durch die Filetiermesser mitgeteilte Beschleunigungsenergie nicht sicher ausreichte, den Filetiervorgang zu vollenden.

Die Anregung zu dieser Vorgehensweise entstammte der GB-PS 597 235 , aus welcher eine in einer Filetiermaschine vorgesehene Fördereinrichtung entnehmbar ist, die aus einem Paar einer Bauchfiletiereinrichtung gegenüberliegender Transportscheiben besteht, die die Aufgabe haben, den durch ein Hakenmesser am Schwanzende in seinem Vortrieb kurzseitig behinderten Fisch wieder zu beschleunigen, wenn dieses Hakenmesser nach Trennung der Filets im Schwanzbereich aus der Fischbahn ausgesteuert ist. Dazu sind die in den bereits eingebrachten Rückenfiletierschnitten eintauchenden Transportscheiben an ihrer Peripherie und Innenflanke griffig gestaltet. Wie Versuche zeigen, ist auf diese Weise ein sicherer Vortrieb der Fische nicht zu erreichen.

Der Erfindung liegt die Aufgabe zugrunde, eine leistungsfähige Filetiervorrichtung für Fische zu schaffen, die kompakt baut, leicht bedienbar und unter vergleichsweise geringen Kosten herstellbar ist.

Diese Aufgabe wird erfindungemäß durch eine Vorrichtung der im Erfindungsbetreff beschriebenen Art gelöst, die dadurch gekennzeichnet ist, daß das Paar Bauchfiletiermesser in Durchlaufrichtung der Fische dem Paar Rückenfiletiermesser vorgelagert angeordnet ist, die den Rückenführungen zuweisenden Führungskanten der Bauchführungen tangential zu den Umfangsschneiden der Bauchfiletiermesser verlaufen, die Rückenfiletiermesser mit ihren Umfangsschneiden zwischen die Bauchführungen eintauchbar gelagert sind, die paarweise angeordneten Bauch- und Rückenfiletiermesser jeweils gegen die Kraft einer Feder axial auseinanderdrängbar ausgebildet sind, und die Umfangsschneiden der Bauch- und Rückenfiletiermesser mindestens an ihren einander zugekehrten Flanken mit Fasen versehen sind.

Die damit erzielbaren Vorteile beruhen insbesondere darauf, daß neben der sicheren Förderung der Fischrümpfe aufgrund der klemmenden Einwirkung der Bauch- und Rückenfiletiermesser auf die Bauch- und Rückenspeichen eine hohe Ausbeute erzielt wird, da die Schnittebenen dieser Messer unmittelbar an den Flanken der Bauch- und Rückenspeichen verlaufen, ohne daß die Gefahr eines Anschnitts derselben besteht. Bei einer vorteilhaften Modifikation der erfindungsgemäßen Vorrichtung, bei welcher die Bauchführungen und die Rückenführungen jeweils mit ihren vorderen Führungsabschnitten den Außenflanken der Bauch- bzw. Rückenfiletiermesser unter Freihalten eines dem ankommenden Fisch entgegengerichteten Teils der Umfangsschneiden zugeordnet sind, können die Bauch- und Rückenführungen jeweils unter Federkraft gegen die Außenflanken der Bauch- bzw. Rückenfiletiermesser angelegt gehalten und mit diesen auseinanderdrängbar ausgebildet sein.

Die Vorrichtung kann auch zur Bearbeitung von Fischrümpfen mit Bauchhöhle eingesetzt werden, wenn sie mit Schabewerkzeugen bekannter Art zum Abschaben des Muskelfleisches von den Rippen bzw. Wirbelfortsätzen ausgestattet ist, die den den Bauchführungen zuweisenden Führungskanten der Rückenführungen zugeordnet sind, und welche dadurch gekennzeichnet ist, daß zwischen den Bauchführungen ein angetriebener Hilfsförderer mit bis zwischen die Rückenführungen aufragenden Mitnehmern in einer Teilung vorgesehen ist, die der Länge des größten zur Verarbeitung kommenden Fischs mindestens entspricht. Dabei ist eine taktfreie Beschickung der Vorrichtung möglich, wenn die Mitnehmer des Hilfsförderers in Förderrichtung der Fische ausweichbar ausgebildet sind. Schließlich kann noch zwecks Nutzung der Schwerkraft beim Durchlauf der Fische durch die Vorrichtung die Bahn der Fische senkrecht ausgerichtet sein, wobei die Rückenfiletiermesser mittels Kraft einer Feder zwischen die Bauchführungen eingetaucht gehalten werden.

Die Erfindung wird nachfolgend anhand eines in der Zeichnung dargestellten Ausführungsbeispiels näher erläutert. Es zeigt
- Fig. 1: eine Seitenansicht der erfindungsgemäßen Vorrichtung in vereinfachter Darstellung,
- Fig. 2: eine Draufsicht auf die Vorrichtung mit Einblick in die Führungsklappen im Eingabebereich,
- Fig. 3: einen Teil-Längsschnitt durch die Vorrichtung längs der Fischbahn,
- Fig. 4: einen Querschnitt durch die Filetiermesser,
- Fig. 5: eine axonometrische Teilansicht des Schabewerkzeuges.
- Fig. 6: einen Teil-Querschnitt durch die Rückenfiletiermesser in der Phase der Bearbeitung des Schwanzbereiches eines Fisches,
- Fig. 7: einen Teil-Querschnitt entsprechend Fig. 6 in der Phase der Bearbeitung eines Bereiches des Fisches in der Nähe des Bauchhöhlenendes.

Die erfindungsgemäße Filetiervorrichtung ist in einem nicht näher dargestellten Gestell untergebracht und umfaßt als wesentliche Teile einen aus einem Satz Führungsklappen gebildeten Eingabetrichter 1 , unterhalb desselben angeordnete Paare von Bauch- 2 und Rückenfiletiermessern 3 und an diese anschließende Paare von Bauch- 4 und Rückenführungen 5 .

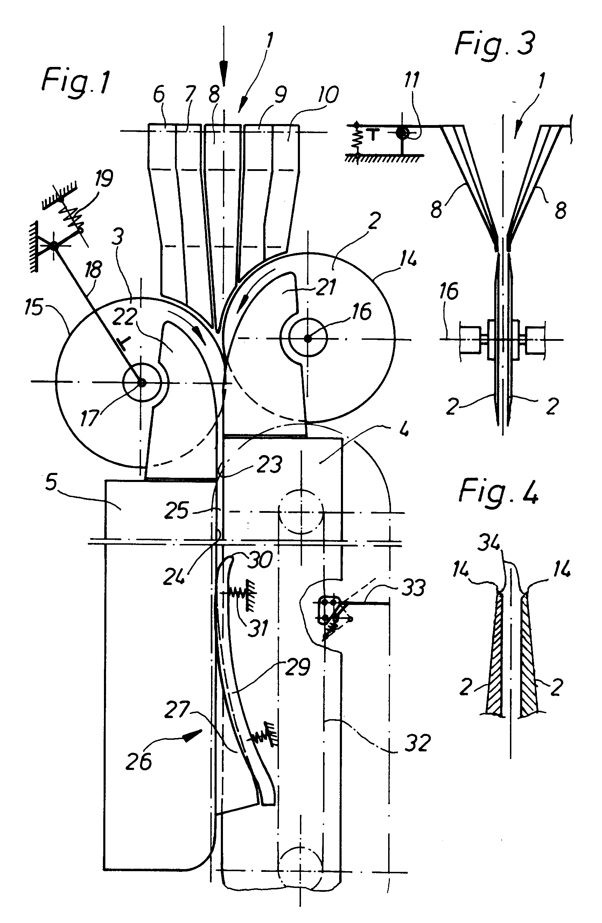

Der den Eingabetrichter 1 bildende Satz Führungsklappen besteht aus mehreren, beispielsweise fünf Paaren symmetrisch zueinander angeordneter Führungsklappen 6 bis 10 , die um horizontale Achsen 11 und 12 schwenkbar gelagert und miteinander in bekannter, nicht dargestellter Weise synchron verdrängbar gekoppelt sind und durch Federkraft gegeneinander gehalten werden, so daß an ihren unteren Enden ein paralleler Spalt 13 von einigen Millimetern Breite entsteht. Die unteren Enden der Führungsklappen 6 bis 10 stehen den Umfangsschneiden 14 und 15 der Bauch- 2 bzw. Rückenfiletiermesser 3 unmittelbar gegenüber und sind entsprechend Fig. 1 so ausgeformt, daß sie der Kreiskontur der Bauch- 2 und Rückenfiletiermesser 3 folgen. Jedes der Filetiermesser ist für sich gelagert und auf geeignete Weise umlaufend angetrieben. Dabei sind die Achsen 16 der Bauchfiletiermesser 2 gestellfest und die Achsen 17 der Rückenfiletiermesser 3 in einer Schwinge 18 gelagert, welche durch eine Feder 19 gegen einen Anschlag in die Bahn der Fische eingeschwenkt gehalten wird. Jedes der Bauch- 2 und Rückenfiletiermesser 3 ist, wie aus Fig. 2 ersichtlich, axial verschiebbar und jeweils gegen die Kraft einer Feder 20 aus der Fischbahn verdrängbar gelagert, und ihre Anordnung so getroffen, daß die Bauchfiletiermesser 2 in Arbeitsrichtung der Vorrichtung betrachtet, den Rückenfiletiermessern 3 vorgelagert sind und ihre Umfangsschneiden 14 und 15 unter geringem gegenseitigen Abstand umlaufen. Die Bauch- 4 und Rückenführungen 5 sind in bekannter Weise in den Ebenen der Außenflanken der Bauch- 2 und Rückenfiletiermesser 3 angeordnet und überdecken deren Außenflanken jeweils mit Führungsabschnitten 21 und 22 , die unter flexibler Anbindung in die Bauch- 4 und Rückenführungen 5 übergehen. Dabei sind die den letztgenannten gegenüberstehenden Führungskanten 23 der Bauchführungen 4 zu den Umfangsschneiden 14 der Bauchfiletiermesser 2 tangential ausgerichtet, während die Führungskanten 24 der Rückenführungen 5 den Führungskanten 23 der Bauchführungen 4 unter Belassung eines seitlichen Spaltes 25 gegenüberstehen.

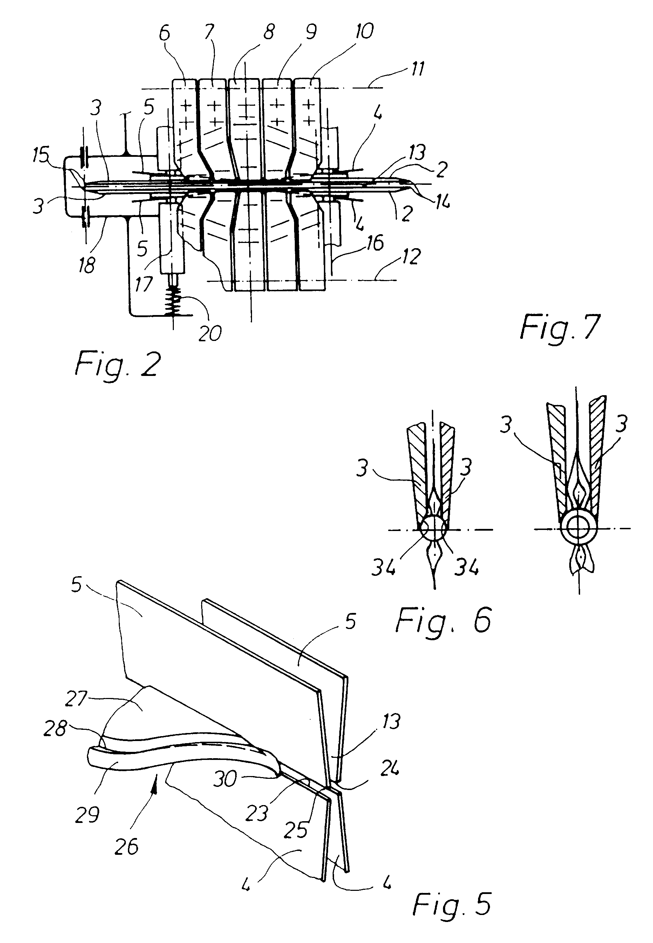

Durch Einbau eines Schabewerkzeuges 26 kann die Vorrichtung auch für die Bearbeitung von Fischrümpfen mit Bauchhöhle geeignet gemacht werden. Dazu wird jeder Führungskante 24 der Rückenführungen 5 , entsprechend Fig. 5 , jeweils ein Schabemesser 27 zugeordnet. Diese bilden Teile der Mantelfläche eines gedachten Hohlprismas mit in Anpassung an die Bauchhöhlenform der Fische etwa elliptischem Querschnitt, dessen Querschnittsebene durch die lange Achse sich mit der Symmetrieebene der Bauch- 4 und Ruckenführungen 5 deckt und dessen Längsachse parallel zu den Führungskanten 23 und 24 der Bauch- 4 und Rückenführungen 5 verläuft, und zu welchem die Führungskanten 23 der Rückenführungen 5 Mantellinien bilden. Die Schneide 28 jedes Schabemessers 27 verläuft auf der Mantelfläche dieses Hohlprismas längs einer steilgängigen Schraubenlinie und zwar so, daß die Schneiden 28 in Arbeitsrichtung der Vorrichtung an den Außenflanken der Rückenführungen 5 beginnend divergieren. Den beiden Schneiden 28 der Schabemesser 27 liegt jeweils eine diesen angepaßte Gegenlage 29 unter Belassung eines Spaltes gegenüber, welche an ihrem, gegen die Förderrichtung gerichteten Ende eine nach unten abgebogene Spitze 30 aufweist. Jede Gegenlage 29 wird vermittels der Kraft von Federn 31 so gegen einen nicht gezeigten Anschlag gehalten, daß sich die Spitze 30 im Bereich der Flanken der Bauchführungen 4 befindet. Der das Schabewerkzeug 26 beinhaltende Bausatz umfaßt auch einen zwischen den Bauchführungen 4 anzuordnenden angetriebenen Hilfsförderer 32 mit bis zwischen die Rückenführungen 5 aufragenden Mitnehmern 33 , deren Teilung der Länge des größten zur Verarbeitung kommenden Fischs mindestens entspricht. Die Mitnehmer 33 sind in Förderrichtung des Hilfsförderers 32 gegen Federkraft ausweichbar ausgebildet.

Die Wirkungsweise der erfindungsgemäßen Vorrichtung ist folgende:
Ein zu filetierender Fischrumpf wird mit dem Schwanz voraus und mit seiner Symmetrieebene parallel zu dem Spalt 13 in den Eingabetrichter 1 gegeben. Bei Durchtritt der Schwanzflosse des Fisches durch den Spalt 13 der Führungsklappen 6 bis 10 erfolgt durch die Bauchfiletiermesser 2 ein Einschnitt zu beiden Seiten der Bauchspeichen bis zur Mitte der Flanken der Wirbelsäule. In diese Einschnitte dringen zunächst die Führungsabschnitte 21 , welche wie die Führungsabschnitte 22 im Auflaufbereich ausgeschärft sind, um das freigeschnittene Filetfleisch widerstandslos aufzusammeln. Durch die gegenüber den Bauchfiletiermessern 2 gestaffelte Anordnung der Rückenfiletiermesser treten diese später in den Fisch einschneidend in Aktion. Die erzeugten Einschnitte zu beiden Seiten der Rückenspeichen schließen dadurch, daß die Rückenfiletiermesser 3 in ihrer Grundstellung zwischen die Führungsabschnitte 21 eintauchen, an die Bauchfiletierschnitte an, d. h. es erfolgt zunächst direkt ein vollständiges Abtrennen der Filets. Die Bauch- 2 und Rückenfiletiermesser 3 sind in ihrer Grundstellung so eng gestellt, daß das zum Kopfende des Fisches zunehmend dicker werdende Rückgrat, insbesondere die Rückenfiletiermesser 3 , gegen die Kraft der Federn 20 unter Mitnahme der Führungsabschnitte 22 der Rückenführungen 5 auseinander drängt.

Im weiterem Verlauf des Filetierprozesses beginnt nun eine Verdrängung der Rückenfiletiermesser 3 gegen die Feder 19 , was dadurch zustandekommt, daß sich die Fasen 34 der Rückenfiletiermesser 3 auf den Schultern der Wirbel abzustützen beginnen, wie in den Figuren 6 und 7 dargestellt ist. Etwa gleichzeitig beginnen auch die Messerpaare axial gegeneinander auszuweichen, da auch die Bauch- bzw. Rückenspeichen an Stärke zunehmen. Es ergibt sich daraus ein fördernder Angriff an dem Grätengerüst, der durch reibschlüssigen Kontakt zwischen den Bauch- bzw. Rückenspeichen und den Flanken der Messer sowie zwischen den Fasen 34 und den Schultern der Wirbel zustandekommt.

Aufgrund der damit sichergestellten Förderung gelangt schließlich das Bauchhöhlenende in den Bereich der Filetierwerkzeuge. Während das Bauchfiletiermesser 2 anschließend wirkungslos durch die Bauchhöhle hindurchläuft, schwenken die Rückenfiletiermesser 3 bei Bearbeitung eines Fisches mit entfernter Bauchhöhle, d. h. mit herausgeschnittenem Rückgrat in diesem Bereich in die Grundstellung zurück, wobei der fördernde Angriff durch Klemmschluß der Messer an dem die Rückenspeichen enthaltenden Grätenstreifen erhalten bleibt.

Bei Fischen mit kurzer Bauchhöhle oder einem Bauchhöhlenrest bewirken die Wirbelsäule bzw. die seitlichen Wirbelfortsätze oder Rippen, daß die Fasen 34 der Rückenfiletiermesser 3 , wie oben dargelegt, als Stützflächen fungieren mit der Wirkung, daß die Rückenfiletiermesser 3 über die Rippen oder seitlichen Wirbelfortsätze hinweggeführt werden, wobei diese allenfalls angeschnitten werden. Das im Ausführungsbeispiel verwendete Schabewerkzeug sorgt in diesem Falle für eine Trennung der zuletzt noch bestehenden Verbindung zwischen den Filets und den Rippen, welche Trennschnitte an die Rückenfiletierschnitte anschließen und das vollständige Ablösen der Filets bewirken. Dabei überlaufen die Spitzen 30 der Gegenlagen 29 des Schabewerkzeuges 26 , so daß die Schabemesser 27 mit ihren Schneiden 28 das Muskelfleisch auch von diesen Skeletteilen unter Verdrängen der Gegenlage 29 abzutrennen vermögen. Der während dieses Vorgangs benötigte Vorschub wird durch den Hilfsförderer 32 erzeugt, dessen Mitnehmer 33 den Fisch am Kopfende schiebend hinterfaßt. Trifft ein Fisch auf einen Mitnehmer 33 , so wird dieser aufgrund der rückseitigen Belastung verdrängt. Nach Unwirksamwerden der Förderung durch die Bauch- 2 und Rückenfiletiermesser 3 bleibt der Fisch dann so lange liegen, bis ein Mitnehmer 33 auftaucht, der den Fisch an seinem Kopfende zu hinter fassen vermag. Um die Sicherheit des Anschnitts nach Eingabe des Fisches in den Eingabetrichter 1 zu verbessern, kann ein Mechanismus vorgesehen sein, mittels dessen die Führungsklappen 6 bis 10 manuell synchron ausklappbar sind, wobei auch eine gestaffelte Betätigung möglich ist, um die Zentrierfunktion des Eingabetrichters 1 zu erhalten.

## Patentansprüche

1. Vorrichtung zum Filetieren von Fischrümpfen, insbesondere von Fischen mit kurz gewachsener oder durch entsprechende Schnittführung beim Köpfen bis auf einen geringen Rest gekürzter bzw. ganz entfernter Bauchhöhle, mit jeweils Paaren von umlaufend angetriebenen Bauchfiletiermessern (2) , Rückenfiletiermessern (3) , die mit ihren Achsen in einer Schwinge (18) gelagert sind, welche durch eine Feder (19) in Richtung der Bahn der Fische belastet wird, sowie in den Ebenen der Rückenfiletiermesser (3) angeordneter, untereinander einen Spalt (13) für den Durchlaß der Bauch- bzw. Rückenspeichen und miteinander einen seitlichen Spalt (25) belassender Bauch- (4) und Rückenführungen (5) , **dadurch gekennzeichnet,** daß
- das Paar Bauchfiletiermesser (2) in Durchlaufrichtung der Fische dem Paar Rückenfiletiermesser (3) vorgelagert angeordnet ist,
- die den Rückenführungen (5) zuweisenden Führungskanten (23) der Bauchführungen (4) tangential zu den Umfangsschneiden (14) der Bauchfiletiermesser (2) verlaufen,
- die Rückenfiletiermesser (3) mit ihren Umfangsschneiden (15) zwischen die Bauchführungen (4) eintauchbar gelagert sind,
- die paarweise angeordneten Bauch- (2) und Rückenfiletiermesser (3) jeweils gegen die Kraft einer Feder (20) axial auseinanderdrängbar ausgebildet sind, und
- die Umfangsschneiden (14 bzw. 15) der Bauch- (2) und Rückenfiletiermesser (3) mindestens an ihren einander zugekehrten Flanken mit Fasen (34) versehen sind.

2. Vorrichtung nach Anspruch 1 , bei welcher die Bauchführungen (4) und die Rückenführungen (5) jeweils mit ihren vorderen Führungsabschnitten (21 u. 22) den Außenflanken der Bauch- (2) bzw. Rückenfiletiermesser (3) unter Freihalten eines dem ankommenden Fisch entgegengerichteten Teils der Umfangsschneiden (14 u. 15) zugeordnet sind, **dadurch gekennzeichnet,** daß die Bauch- (4) und Rückenführungen (5) jeweils unter Federkraft gegen die Außenflanken der Bauch- (2) bzw. Rückenfiletiermesser (3) angelegt gehalten und mit diesen auseinanderdrängbar ausgebildet sind.

3. Vorrichtung nach den Ansprüchen 1 oder 2 , mit zum Abschaben des Muskelfleisches von den Rippen bzw. seitlichen Wirbelfortsätzen vorgesehenen Schabemessern (27) , die den den Bauchführungen (4) zuweisenden Führungskanten (24) der Rückenführungen (5) zugeordnet sind, **dadurch gekennzeichnet,** daß zwischen den Bauchführungen (4) ein angetriebener Hilfsförderer (32) mit bis zwischen die Rückenführungen (5) aufragenden Mitnehmern (33) in einer Teilung vorgesehen ist, die der Länge des größten zur Verarbeitung kommenden Fischs mindestens entspricht.

4. Vorrichtung nach Anspruch 3 , **dadurch gekennzeichnet,** daß die Mitnehmer (33) des Hilfsförderers (32) in Förderrichtung der Fische ausweichbar ausgebildet sind.

5. Vorrichtung nach einem der Ansprüche 1 bis 4, **dadurch gekennzeichnet,** daß die Bahn der Fische senkrecht ausgerichtet ist, wobei die Rückenfiletiermesser (5) mittels der Kraft einer Feder (19) zwischen die Bauchführungen (4) eingetaucht gehalten werden.

## Claims

1. Device for the filleting of fish carcasses, especially of fish with belly cavities entirely removed or grown short or shortened to a small reminder by corresponding cut guidance during beheading, comprising respective pairs of rotationally driven belly filleting knives (2), back filleting knives (3), which are mounted by their axles in a rocker (18) which is loaded by a spring (19) in the direction of the path of the fish, as well as belly guides (4) and back guides (5) which are arranged in the planes of the back filleting knives (3) and leave guide-to-guide a gap (13) for the passage of the belly spokes or back spokes and altogether a lateral gap (25), characterised thereby that
- the pair of belly filleting knives (2) is arranged mounted ahead of the pair of back filleting knives (3) in the throughflow direction of the fish,
- the guide edges (23), which face the back guides (5), of the belly guides (4) run tangentially to the circumferential cutting edges (14) of the belly filleting knives (2),
- the back filleting knives (3) are mounted to be able to penetrate by their circumferential cutting edges (15) between the belly guides (4),
- the belly filleting knives (2) and back filleting knives (3), arranged in pairs, are each time constructed to be urgeable apart against the force of a spring (20), and
- the circumferential cutting edges (14 or 15) of the belly filleting knives (2) and back filleting knives (3) are provided with chamfers (34) at least at their mutually facing flanks.

2. Device according to claim 1, in which the belly guides (4) and the back guides (5) are associated by their forward guide portions (21 and 22) with the outer flanks of the belly filleting knives (2) and back filleting knives (3) respectively while keeping free a part, which is directed against the arriving fish, of the circumferential cutting edges (14 and 15), characterised thereby that the belly guides (4) and back guides (5) are held under spring force against the outer flanks of the belly filleting knives (2) and back filleting knives (3) respectively and are constructed to be urgeable apart with these.

3. Device according to claim 1 or 2, with scraper knives (27) for scraping muscle flesh from the ribs or lateral vertebral processes, which knives are associated with the guide edges (24), which face the belly guides (4), of the back guides (5), characterised thereby that provided between the belly guides (4) is a driven auxiliary conveyor (32) with entrainers (33) projecting out to between the back guides (5) and at a spacing which at least corresponds to the length of the largest fish intended for processing.

4. Device according to claim 3, characterised thereby that the entrainers (33) of the auxiliary conveyor (32) are constructed to be deflectable in the conveying direction of the fish.

5. Device according to one of the claims 1 to 4, characterised thereby that the path of the fish is oriented perpendicularly, wherein the back filleting knives (5) are kept, by means of the force of a spring (19), penetrating between the back guides.

## Revendications

1. Dispositif à lever des filets à partir de troncs de poissons, en particulier de poissons dans lesquels la cavité ventrale est naturellement courte ou a été raccourcie en laissant un petit résidu, ou a été totalement enlevée, par un guidage approprié de la coupe lors de l'étêtage, comprenant des paires respectives de couteaux (2) à lever les filets ventraux entraînés à rotation et de couteaux (3) de filets de dos qui sont logés par leurs axes dans un bras oscillant (18), qui est sollicité par un ressort (19) dans la direction de la trajectoire des poissons, ainsi que des guidages de ventres (4) et de guidage de dos (5), disposés dans les plans des couteaux (3) à lever les filets dorsaux, laissant l'un audessous de l'autre une fente (13) pour le passage des rayons de ventres ou de dos et laissant entre eux une fente latérale (25), **caractérisé** en ce que
- la paire de couteaux (2) à lever les filets ventraux est disposée en amont de la paire de couteaux (3) à lever les filets dorsaux, dans la direction de transport des poissons,
- en ce que les arêtes de guidage (23), tournées vers les guidage de dos (5), des guidages ventraux (4) sont de tracé tangentiel aux taillants périphériques (14) des couteaux (2) de filets ventraux,
- en ce que les couteaux (3) à lever les filets dorsaux sont logés de façon à pouvoir plonger par leurs taillants périphériques (15) entre les guidages ventraux (4),
- en ce que les couteaux (2) à lever les filets ventraux et (3) à lever les filets dorsaux, disposés par paires, sont réalisés de manière à pouvoir être écartés axialement en opposition à la force d'un ressort (20) agissant sur chacun, et en ce que
- les taillants périphériques (14 ou 15) des couteaux (2 ou 3) à lever les filets ventraux ou dorsaux sont pourvus de biseaux (34) au moins à leurs flancs tournés l'un vers l'autre.

2. Dispositif selon la revendication 1, dans lequel les guidages ventraux (4) et les guidages dorsaux (5) sont respectivement disposés d'une manière telle que leurs parties de guidage avant (21 et 22) sont associées aux flancs extérieurs des couteaux à lever les filets ventraux (2) et dorsaux (3) en laissant libre une partie des taillants périphériques (14 et 15) orientés en sens inverse au poisson qui arrive, **caractérisé** en ce que les guidages ventraux (4) et dorsaux (5) sont respectivement maintenus appuyés par une force élastique contre les flancs extérieurs des couteaux à lever les filets ventraux (2) ou dorsaux (3) et sont réalisés de manière que ceux-ci puissent être écartés l'un de l'autre.

3. Dispositif selon l'une des revendications 1 ou 2, pourvu de couteaux de raclage (27) pour enlever par raclage, des côtes ou des appendices latéraux des vertèbres, la chair des muscles, couteaux qui sont associés aux arêtes de guidage (24) des guidages dorsaux (5) tournées vers les guidages ventraux (4) , **caractérisé** en ce qu'un transporteur auxiliaire entraîné (32) pourvu d'éléments d'entraînement (33) faisant saillie jusque dans l'intervalle entre les guidages dorsaux (5) est prévu entre les guidages ventraux (4) dans une séparation qui correspond à la longueur du plus grand des poissons à traiter.

4. Dispositif selon la revendication 3, **caractérisé** en ce que les éléments d'entraînement (33) du transporteur auxiliaire (32) sont réalisés de manière à pouvoir être évités dans la direction de transport des poissons.

5. Dispositif selon l'une des revendications 1 à 4, **caractérisé** en ce que la trajectoire des poissons est orientée verticalement, les couteaux à lever les filets dorsaux (5 )étant maintenus plongés entre les guidages ventraux (4) sous l'effet de la force d'un ressort (19).
